# FASCICULE DE BREVET EUROPEEN

(11) **EP 2 617 278 B1**
(45) Date de publication et mention de la délivrance du brevet: **18.01.2017**
(21) Numéro de dépôt: 13305061.7
(22) Date de dépôt: 18.01.2013
(51) Int. Cl.: A01D 34/86

(54) **Équipement agricole pour un véhicule motorisé, avec parallélogramme déformable pour le déport latéral d'une partie outil**
Landwirtschaftliches Gerät für ein motorisiertes Fahrzeug mit verformbarem Parallelogramm zur seitlichen Versetzung eines Werkzeugteils
Farm equipment for a motor vehicle, with a deformable parallelogram for laterally offsetting a tool portion

(30) Priorité: 20.01.2012 FR 1250588
(43) Date de publication de la demande: 24.07.2013
(73) Titulaire: Desvoys et Fils, 53190 Landivy (FR)
(72) Inventeur: Desvoys, Jean-Baptiste, 35000 Rennes (FR)
(74) Mandataire: Jacobacci Coralis Harle

(56) Documents cités:
- WO-A1-03/084307
- WO-A2-2004/021763
- DE-U1-202008 014 778
- DE-U1-202010 011 917
- FR-A1- 2 956 791

## Description

La présente invention concerne un équipement agricole destiné à être attelé à un véhicule motorisé.

Certains équipements agricoles sont attelés à un véhicule motorisé pour le traitement du sol et/ou du couvert végétal.

C'est par exemple le cas des équipements du genre broyeurs qui sont conçus pour le déchiquetage au sol de résidus de récolte (fanes, éteules, etc.), pour l'entretien des terrains enherbés (bords de routes, pâtures, etc.), ou encore pour le broyage de bois de taille.

Pour cela, ces équipements comprennent : - une partie outil, comportant par exemple un rotor pour la coupe et le broyage de végétaux, et - une partie attelage, destinée à être solidarisée avec un automoteur de type tracteur, camion ou spécifiquement adapté.

Certains de ces équipements agricoles comprennent encore des moyens de liaison formant un parallélogramme déformable, pour ajuster le déport latéral de la partie outil par rapport à la partie attelage.

Ce réglage du déport de la partie outil, manoeuvré par le conducteur de l'automoteur, permet d'éviter et de contourner les obstacles visibles que sont notamment les arbres, les poteaux ou les panneaux de signalisation.

En pratique, l'opérateur doit ainsi faire preuve d'une concentration permanente pour, à la fois, conduire le véhicule motorisé et commander le déport de la partie outil constitutive de l'équipement agricole associé.

Cependant, des obstacles de toute nature (naturels ou non) peuvent être dissimulés dans une matière fournie ; et malgré toute l'attention de l'opérateur, lors d'un broyage, la partie outil de l'équipement agricole est susceptible de buter et percuter contre de tels obstacles, avec des déformations ou ruptures inhérentes de pièces constitutives du véhicule et/ou de l'équipement associé.

De même, si l'opérateur souhaite travailler avec précision auprès d'un obstacle vers l'avant ou vers l'arrière, il peut hésiter à trop en approcher de peur de déformer ou de détériorer le véhicule motorisé, l'équipement agricole et/ou l'obstacle lui-même.

Pour limiter ces inconvénients, certains équipements agricoles sont équipés de systèmes de sécurité de type chape inférieure d'attelage montée sur pivot, bielle formant coulisse équipée d'un ressort de rappel, ou chape montée sur lame ressort de rappel solidarisée sur la bordure inférieure de l'attelage ; mais un tel système présente cependant une faible amplitude, le rendant relativement inefficace.

Le document DE-20 2010 011 917 décrit par exemple un broyeur d'accotement pour la tonte d'une bordure de route.

Cet équipement comprend un bras en porte-à-faux terminé par un parallélogramme déformable associé à des vérins hydrauliques pour sa manoeuvre.

Les mouvements de ce parallélogramme déformable sont contrôlés par une tige détecteur d'appui, montée pivotante à l'avant de la partie outil pour venir coopérer avec un obstacle (tel qu'un poteau vertical d'une barrière).

Les vérins de manoeuvre sont pilotés activement en longueur pour la manoeuvre du parallélogramme déformable.

La présence d'un obstacle entraîne un contact avec la tige détecteur, laquelle entraîne le pilotage des vérins pour manoeuvrer le parallélogramme déformable afin d'éviter le contact entre l'outil et l'obstacle.

Une telle structure présente l'inconvénient d'être particulièrement complexe, nécessitant un pilotage pointu et en continu des vérins de manoeuvre pour éviter l'appui de la partie outil sur l'obstacle.

Dans ce contexte, il existe un besoin pour la conception d'un équipement agricole apte à s'effacer largement au contact d'un obstacle, puis à revenir automatiquement dans sa position initiale une fois le contact interrompu.

A cet effet, l'équipement agricole selon l'invention comporte : - une partie outil, - une partie attelage, destinée à être solidarisée avec le véhicule motorisé associé, - des moyens de liaison formant un parallélogramme déformable, comprenant deux chaînons juxtaposés dont les extrémités sont montées pivotantes autour d'axes de rotation verticaux sur ladite partie outil et ladite partie attelage, et - des moyens de manoeuvre, pour ajuster le déport latéral de ladite partie outil par rapport à ladite partie attelage par pivotement desdits chaînons autour de leurs axes de rotation respectifs ; et cet équipement est caractérisé par le fait que l'un au moins desdits chaînons pivotants consiste en au moins un organe télescopique qui présente une longueur L au repos, avec une course disponible en allongement et/ou en raccourcissement par rapport à ladite longueur au repos ; et ledit organe télescopique est associé à des moyens de rappel élastique à ladite longueur L au repos.

Les moyens de liaison forment ainsi un parallélogramme déformable qui permet un déplacement de la partie outil parallèlement à elle-même ; ces moyens de liaison autorisent en outre un pivotement de la partie outil par rapport à la partie attelage, assurant le phénomène d'effacement.

Selon un mode de réalisation préféré, l'organe télescopique consiste en un vérin à fluide, de type hydraulique ou pneumatique.

Dans ce cas, l'organe télescopique consiste avantageusement en un vérin comprenant un cylindre présentant deux extrémités opposées qui sont chacune équipées d'une tige mobile, offrant une course en allongement et en raccourcissement dudit organe télescopique par rapport à la longueur L au repos.

De préférence, encore dans ce cas, l'organe télescopique consiste en un vérin hydraulique ; et les moyens de rappel élastique consistent en un accumulateur hydraulique pour assurer un retour dudit vérin dans une position initiale correspondant à la longueur L au repos.

Selon encore une caractéristique particulière, le second chaînon pivotant comporte au moins un bras non-télescopique.

Dans ce cas, le second chaînon pivotant se compose avantageusement de deux bras non-télescopiques superposés indépendants, l'un supérieur et l'autre inférieur, qui s'étendent dans un même plan vertical et dont les extrémités sont montées pivotantes autour d'axes de rotation verticaux coaxiaux sur la partie outil et la partie attelage.

Encore de préférence, un châssis de la partie attelage et un châssis de la partie outil sont définis par une bordure supérieure et par une bordure inférieure ; et lesdits bras non-télescopiques relient, pour l'un, lesdites bordures supérieures et, pour l'autre, lesdites bordures inférieures.

Encore dans ce cas, un châssis de la partie attelage et un châssis de la partie outil sont définis par deux bordures latérales ; et les chaînons pivotants relient ces châssis de telle sorte que : - l'organe télescopique relie deux bordures latérales en regard desdits châssis associés, et - le ou les bras non-télescopiques s'étendent entre lesdites bordures latérales desdits deux châssis associés, de préférence à égale distance desdites bordures latérales.

Toujours dans ce cas, les moyens pour ajuster le déport latéral de ladite partie outil par rapport à ladite partie attelage consistent avantageusement en un actionneur linéaire intercalé entre le ou l'un des bras non-télescopiques et ladite partie outil.

D'autres caractéristiques avantageuses, pouvant être prises indépendamment ou en combinaison les unes avec les autres, sont précisées ci-dessous :
- la partie outil comporte - au moins une pièce rotative pour la coupe et le broyage de végétaux, et - un châssis relié à la partie attelage par lesdits moyens de liaison et intégrant un arbre traversant de transmission pour l'entraînement de ladite pièce rotative ; ledit arbre traversant est cannelé à l'avant et à l'arrière pour autoriser son montage indifférent à l'avant ou à l'arrière du véhicule motorisé ;
- la partie outil comporte - au moins une pièce rotative pour la coupe et le broyage de végétaux, et - un châssis relié à la partie attelage par les moyens de liaison, laquelle pièce rotative est assemblée avec ledit châssis par le biais d'au moins une articulation horizontale autorisant une rotation de ladite pièce rotative entre - une position relevée au repos et - une position déployée de travail ; en outre la partie outil comporte des moyens de verrouillage qui sont mobiles entre une position active, apte à bloquer ladite pièce rotative dans ladite position relevée, et une position inactive, pour libérer ladite pièce rotative ; dans ce cas, l'équipement comporte avantageusement des moyens d'asservissement associés aux moyens de verrouillage et aux moyens de manoeuvre en déport pour ajuster le déport latéral de la partie outil, de sorte à assurer le déplacement en position inactive desdits moyens de verrouillage et une action sur lesdits moyens de manoeuvre en déport ; encore dans ce cas, l'équipement agricole comporte avantageusement deux articulations horizontales ménagées de part et d'autre du châssis porteur de la partie outil, pour définir un triangle, équilatéral ou isocèle, avec l'axe de rotation défini par l'extrémité du ou des bras non-télescopiques associés audit châssis de la partie outil.

L'invention sera encore illustrée, sans être aucunement limitée, par la description suivante en relation avec les dessins annexés dans lesquels :
- la figure 1 est une vue de dessus d'un véhicule tracteur, ici équipé de deux équipements agricoles selon l'invention, l'un en position avant et l'autre en position arrière ;
- la figure 2 est une vue générale et en perspective de l'un des équipements agricoles de la figure 1, représenté isolément ;
- la figure 3 représente l'équipement agricole de la figure 2, selon une seconde perspective ;
- les figures 4 et 5 représentent l'équipement agricole des figures 2 et 3, vu de dessus, avec la partie outil manoeuvrée entre une position déportée (figure 4) et une position escamotée ou recentrée (figure 5) ;
- les figures 6 à 8 montrent toujours le même équipement avec une représentation schématique des moyens de liaison, en montage avant et lors d'un contact avec un obstacle, et dont la partie outil se trouve, respectivement, en position neutre, en position effacement vers l'arrière et en position effacement vers l'avant (la position neutre est illustrée en traits discontinus sur les figures 7 et 8) ;
- la figure 9 illustre les mouvements de la pièce rotative de broyage/déchiquetage autour d'un axe de rotation horizontal, par rapport au châssis relié à la partie attelage par les moyens de liaison, pour sa manoeuvre notamment dans une position relevée au repos et une position déployée de travail.

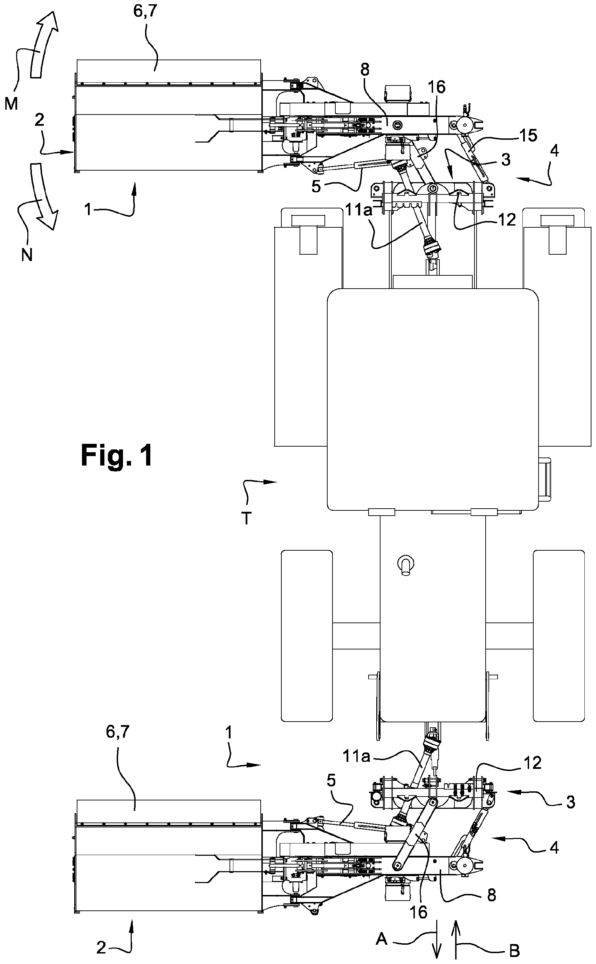

Tel qu'illustré sur la figure 1, l'équipement agricole 1 est destiné à être attelé sur un véhicule motorisé, par exemple un véhicule tracteur T.
En l'occurrence et cela uniquement à titre d'illustration, le véhicule tracteur T est ici équipé de deux équipements agricoles 1, l'un en montage arrière (en partie supérieure sur la figure 1) et l'autre en montage avant (en partie inférieure sur la figure 1).

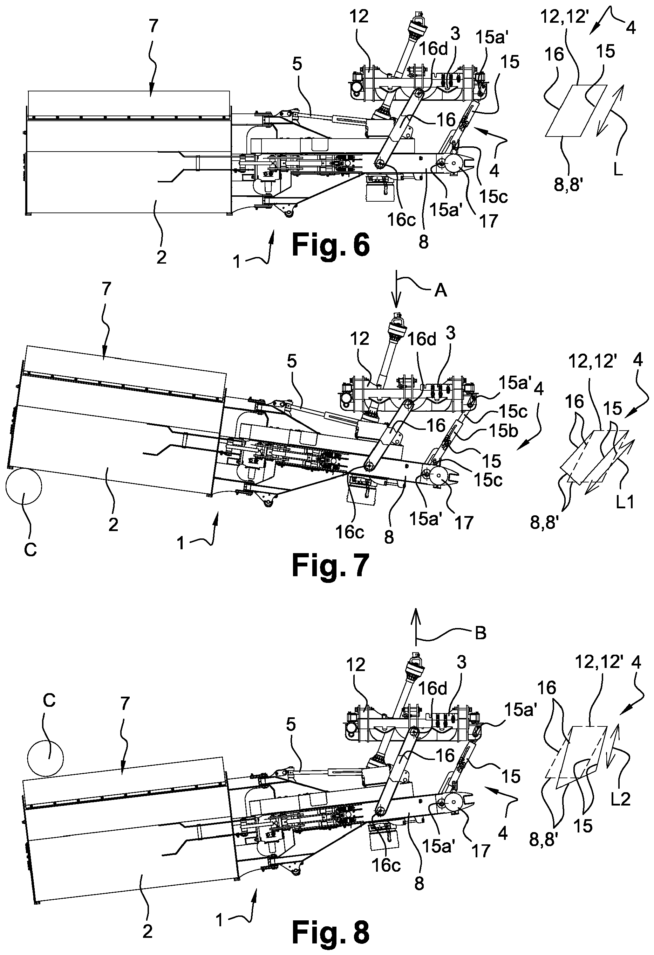

Selon l'invention, lors de l'avancement du véhicule tracteur T, chaque équipement agricole 1 est apte à s'effacer largement au contact d'un obstacle, vers l'avant et/ou vers l'arrière, puis à revenir dans sa position initiale neutre une fois le contact interrompu (tel que décrit ci-après en particulier en relation avec les figures 6 à 8).
Cette particularité fonctionnelle permet de limiter les risques d'une détérioration de l'équipement agricole 1, du véhicule motorisé T équipé et/ou de l'obstacle percuté ; il est également ainsi possible de fournir un travail de précision autour de l'obstacle concerné.

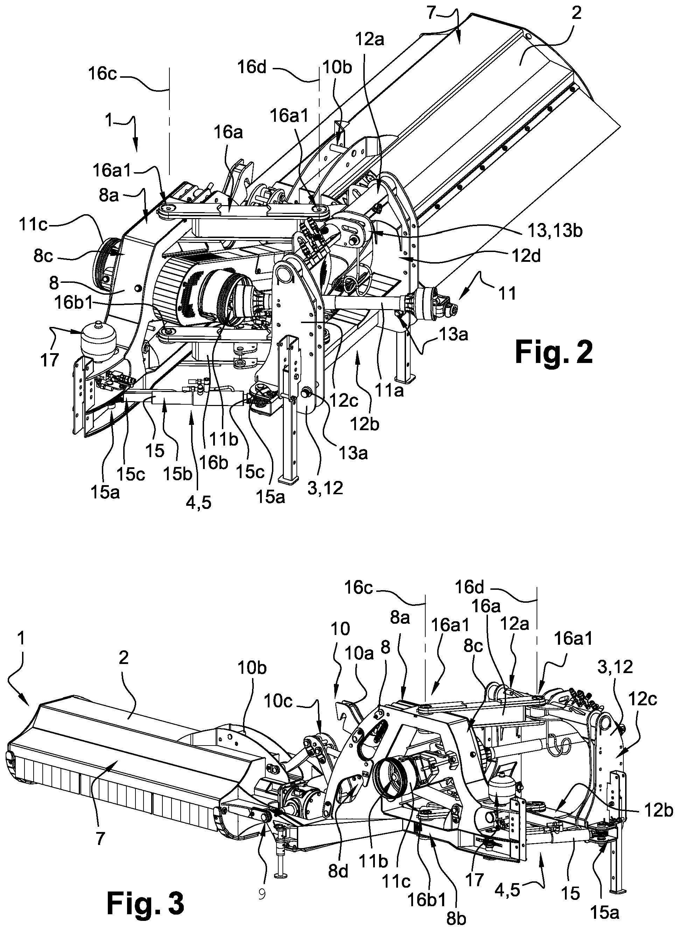

Tel qu'illustré en particulier par les figures 2 à 5, l'équipement agricole 1 correspondant comprend deux parties :
- une partie outil 2, pour le traitement des végétaux (par exemple du type broyage et déchiquetage), et
- une partie attelage 3, destinée à être solidarisée avec le véhicule motorisé T.

Intercalé entre ces deux parties 2 et 3, l'équipement agricole 1 comporte encore : - des moyens de liaison 4, formant un parallélogramme déformable pour autoriser un déport latéral de la partie outil 2 par rapport à la partie attelage 3, et - des moyens de manoeuvre en déport 5, pour ajuster ce déport latéral.

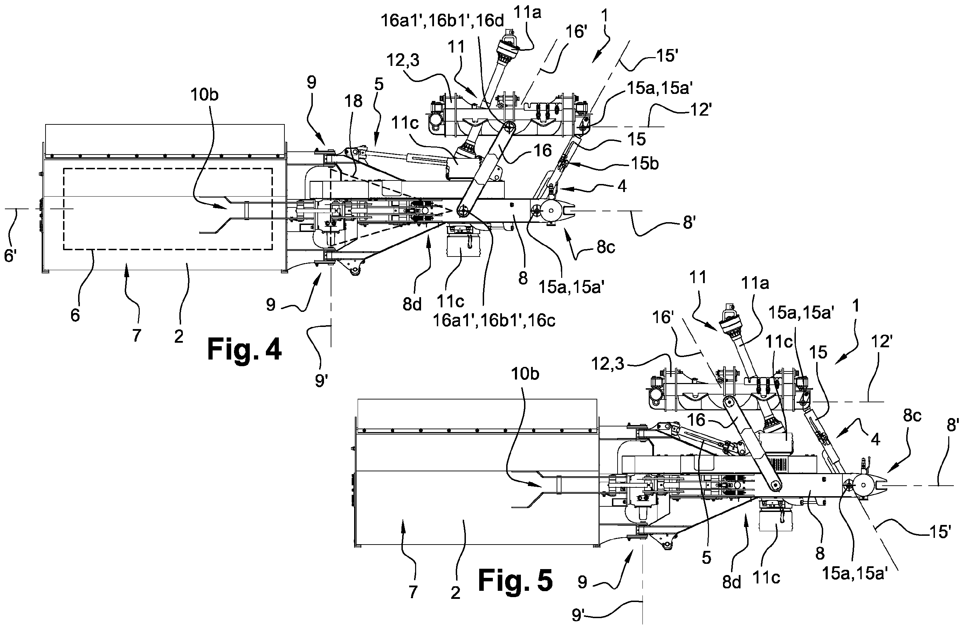

La partie outil 2, adaptée ici pour le broyage et le déchiquetage de végétaux, comporte :
- une pièce rotative horizontale 6 ou rotor horizontal (illustré schématiquement sur la figure 4), dont la rotation autour de son axe 6' assure la coupe et le broyage de végétaux, et qui est protégé ici par un caisson 7, et
- un châssis 8, portant l'ensemble caisson 7 / pièce rotative 6 et coopérant avec la partie attelage 3 par le biais des moyens de liaison 4.

Le châssis 8 de cette partie outil 2 présente une forme générale quadrangulaire, définissant un plan général 8' s'étendant ici verticalement (figures 4 et 5).

En l'occurrence, selon les figures 2 et 3, le châssis 8 présente une forme de trapèze qui se compose d'une bordure supérieure 8a (destinée à s'étendre à distance du sol), d'une bordure inférieur 8b (destinée à s'étendre du côté du sol), d'une première bordure latérale 8c (s'étendant à distance de l'ensemble rotor/caisson), et d'une seconde bordure latérale 8d (s'étendant du côté de l'ensemble rotor/caisson - figures 3, 4 et 5).

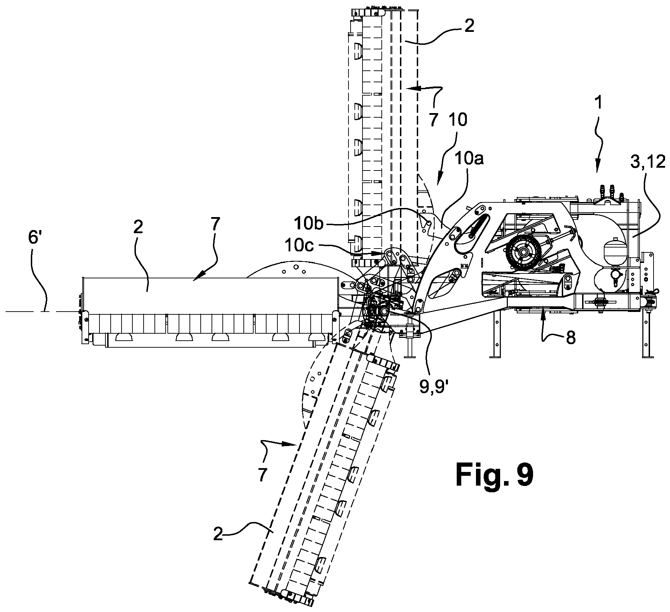

Du côté de sa seconde bordure latérale 8d, le châssis 8 est solidarisé avec le caisson 7 par l'intermédiaire d'articulations horizontales 9 (figures 3 à 5).
Ces articulations horizontales 9 ont pour fonction d'autoriser une rotation de l'ensemble rotor 6/caisson 7 autour d'un axe de pivotement horizontal 9' qui s'étend perpendiculairement à l'axe de rotation 6' du rotor 6 et au plan général 8' du châssis 8 (voir notamment figure 9).

Ici au nombre de deux, les articulations horizontales 9 sont ménagées de manière symétrique par rapport au plan général 8' du châssis 8, à une même distance et de part et d'autre de ce dernier.
Tel que développé ci-après, cette disposition particulière participe à la rigidification de l'équipement agricole 1 lors d'un appui contre un obstacle.

La partie outil 2 comporte encore des moyens 10 pour le verrouillage du rotor 6 dans une position relevée verticale, tel que décrit plus en détails ci-après en relation avec la figure 9.

Ces moyens de verrouillage 10 consistent ici en - un crochet mobile 10a, équipant le châssis 8 et associé à des moyens de manoeuvre (non représentés), et - une tige complémentaire 10b ménagée sur le caisson 7 (visible sur la figure 3).
Les moyens de manoeuvre du crochet 10a consistent par exemple en - un actionneur linéaire simple effet, pour son pivotement en position inactive, et - un ressort de rappel en position active.

Des moyens de manoeuvre 10c, par exemple un actionneur linéaire du genre vérin hydraulique (figure 3), sont intercalés entre le caisson 7 et le châssis 8 pour la manoeuvre de l'ensemble caisson 7/ rotor 6 autour de son axe de rotation horizontal 9'.

La partie outil 2 comporte encore des moyens de transmission 11, pour l'entraînement du rotor 6 par la motorisation du véhicule tracteur T.

Sur les figures 2 à 5, une transmission à cardan 11a, destinée à être accouplée avec la prise de force du véhicule tracteur T, est fixée sur un arbre récepteur 11 b (visible sur la figure 3) intégré dans le châssis 8.

L'arbre récepteur 11 b est ici traversant avec deux extrémités cannelées (non visibles) qui débouchent de part et d'autre du châssis 8 et qui sont protégées chacune au sein d'une coupelle de protection 11c.
Un tel arbre récepteur 11 b autorise un montage indifférent de l'équipement agricole 1, à l'avant ou à l'arrière du véhicule motorisé T, tel qu'illustré par la figure 1.

Une transmission « secondaire », non visible, relie l'arbre récepteur 11 b et le rotor 6.

La partie attelage 3 comporte quant à elle également un châssis 12, s'étendant dans un plan vertical 12' (figures 4 et 5).

Ce châssis 12, ici de forme rectangulaire, se compose :
- d'une bordure supérieure 12a, formée par un premier longeron,
- d'une bordure inférieure 12b formée par un second longeron,
- d'une première bordure latérale 12c, formée par un premier montant et s'étendant à distance de l'ensemble rotor 6/caisson 7, et
- d'une seconde bordure latérale 12d, formée par un second montant et s'étendant du côté de l'ensemble rotor 6/caisson 7.

Ce châssis 12 est en plus muni de moyens 13 qui sont aptes à coopérer avec les moyens d'attelage trois points équipant le véhicule tracteur T, à savoir deux chapes 13a et un point central 13b (figure 2).

Les moyens de liaison 4, entre la partie outil 2 et la partie attelage 3, comprennent quant à eux deux chaînons pivotants juxtaposés 15, 16, à savoir :
- un premier chaînon 15, consistant ici en un organe télescopique, et
- un second chaînon 16, constitué ici de deux bras non-télescopiques superposés indépendants, l'un supérieur 16a (visible figures 2 à 5) et l'autre inférieur 16b (visible figure 2).

L'organe télescopique 15 des moyens de liaison 4 constitue l'un des éléments pour assurer la fonction « effacement élastique » pour la partie outil 2.

Cet organe télescopique 15 consiste en un actionneur linéaire qui définit un axe longitudinal 15' (figure 4) et qui s'étend dans un plan horizontal passant par les bordures inférieures 8b, 12b des châssis 8, 12 des parties outil 2 et attelage 3.

Les deux extrémités 15a de cet organe télescopique 15 sont solidarisées (i) pour l'une sur le châssis 8 de la partie outil 2, au niveau de la jonction entre sa bordure inférieure 8b et sa première bordure latérale 8c, et (ii) pour l'autre sur le châssis 12 de la partie attelage 3, au niveau de la jonction entre sa bordure inférieure 12b et sa première bordure latérale 12c.

Ces deux extrémités 15a sont de plus montées pivotantes chacune autour d'un axe de rotation vertical 15a', s'étendant parallèlement l'un par rapport à l'autre et dans le plan vertical 8', 12' des châssis 8, 12, respectivement.

Plus précisément, cet organe télescopique 15 consiste ici en un vérin hydraulique à double tige comprenant un cylindre 15b présentant deux extrémités opposées qui sont chacune équipées d'une tige mobile 15c constituant l'une desdites extrémités 15a.

Cet organe télescopique 15 sera ici encore dénommé « vérin de sécurité » ou « organe télescopique de sécurité ».

Un tel vérin de sécurité 15 présente en pratique une course en allongement et en raccourcissement, tenant compte d'une longueur au repos.

L'organe télescopique de sécurité 15 présente une longueur au repos L (figure 6), avec une course disponible en allongement (figure 7) et en raccourcissement (figure 8) par rapport à ladite longueur au repos L.

Pour cela, au repos, une première tige mobile 15c (par exemple du côté de la partie outil 2) est en position déployée, et une seconde tige mobile 15c (par exemple du côté de la partie attelage 3) est en position escamotée.

Par exemple, la course de l'organe télescopique 15 est comprise entre 50 mm et 150 mm, de préférence de l'ordre de 80 mm à 120 mm, de part et d'autre de cette longueur au repos L (en allongement et en raccourcissement).

La force développée par cet organe télescopique 15 assure avantageusement un compromis entre :
- un maintien de la partie outil 2 en position neutre,
- une possibilité d'effacement en cas d'appui sur un obstacle, et
- un retour de la partie outil 2 en position neutre suite à un effacement.

Des moyens hydrauliques 17 sont associés à l'organe télescopique 15 pour son rappel élastique dans la longueur au repos L.
Ces moyens hydrauliques de rappel élastique 17 consistent en l'occurrence en un accumulateur hydraulique (visible notamment sur les figures 2 et 3), adapté pour tendre à maintenir, et pour assurer un retour, des deux tiges 15c dans une position initiale correspondant à la longueur au repos du vérin de sécurité 15.

D'autre part, les deux bras non télescopiques 16a et 16b constitutifs du second chaînon pivotant 16 sont indépendants l'un de l'autre et s'étendent dans un même plan vertical 16' (illustré figures 4 et 5).

Chaque bras non télescopique 16a, 16b s'étend en plus dans un plan horizontal passant, respectivement, par les bordures supérieures 8a, 12a et les bordures inférieures 8b, 12b des châssis 8, 12 des parties outil 2 et attelage 3.

Les extrémités 16a1, 16b1 de ces deux bras non télescopiques 16a, 16b sont solidarisées (i) pour l'une sur le châssis 8 de la partie outil 2, respectivement sur sa bordure supérieure 8a et sa bordure inférieure 8b, et (ii) pour l'autre sur le châssis 12 de la partie attelage 3, respectivement sur sa bordure supérieure 12a et sa bordure inférieure 12b.

Plus précisément, ces bras non-télescopiques 16a, 16b s'étendent entre les bordures latérales 8c, 8d et 12c, 12d des châssis 8, 12 associés, avantageusement à égale distance de ces dernières (autrement dit encore, au milieu de la longueur des bordures supérieure 8a, 12a ou inférieure 8b, 12b).

De préférence, les bras non-télescopiques 16a, 16b s'étendent entre les deux chapes latérales d'attelage 13a, au niveau et dans un plan vertical passant par le troisième point d'attelage 13b.

Les extrémités 16a1, 16b1 de ces deux bras non-télescopiques 16a, 16b sont chacune aptes à pivoter autour d'un axe de rotation vertical 16a1', 16b1' (figure 4).

Les axes de rotation 16a1', 16b1' des extrémités 16a1, 16b1 en regard sont coaxiaux sur la partie outil 2 et sur la partie attelage 3, définissant des axes 16c, 16d respectivement.

Ces deux axes de rotation verticaux 16c, 16d s'étendent parallèlement l'un par rapport à l'autre, et dans le plan vertical 8', 12' des châssis 8, 12 respectifs.

Tel qu'illustré sur la figure 4, l'axe de rotation 16c des deux bras non-télescopiques 16a, 16b (sur le châssis 8 de la partie outil 2) définit, avec les deux articulations horizontales 9, un triangle virtuel 18 qui est ici isocèle (figure 4). Cette particularité structurelle vise à limiter la déformation du châssis en cas de choc, ou de contact « appuyé ».

Par ailleurs, les moyens 5 pour ajuster le déport latéral de la partie outil 2 (dit encore « moyens de manoeuvre en déport 5 ») consistent ici en un actionneur linéaire, par exemple un vérin hydraulique, intercalé entre le bras non-télescopique inférieur 16b et l'une des articulations horizontales 9.

Ce vérin hydraulique 5, avantageusement du type double effet, sera ici encore désigné « vérin de déport ».

Ce montage particulier de cet actionneur linéaire 5, en déport sur le bras non-télescopique inférieur 16b et le châssis 8 permet d'augmenter la rigidification du matériel et de diminuer l'encombrement.

L'équipement agricole 1 comporte encore des moyens pour l'asservissement des moyens de verrouillage 10 et des moyens de manoeuvre en déport 5 (par exemple une conception adaptée du circuit hydraulique).

Comme développé encore ci-après, ces moyens d'asservissement (non représentés) sont configurés de sorte à assurer :
- l'action sur l'actionneur linéaire associé au crochet mobile 10a pour son déplacement en position inactive, et l'action sur les moyens de manoeuvre en déport 5 pour le déplacement en position déportée de la partie outil 2, ou
- l'action sur les moyens de manoeuvre en déport 5 pour le déplacement en position recentrée de la partie outil 2, et l'arrêt de l'action sur l'actionneur linéaire associé au crochet mobile 10a pour son retour en position active sous l'effet de son ressort de rappel.

Le vérin 10c pour la manoeuvre de l'ensemble caisson 7/rotor 6 est avantageusement piloté indépendamment de ces moyens d'asservissement.

En pratique, pour son transport sur route, l'ensemble rotor 6/caisson 7 est relevé selon une position verticale, ou au moins approximativement verticale, par rapport à son châssis porteur 8 (figure 9) ; cette position est maintenue par les moyens de verrouillage 10 en position active.

Les moyens de manoeuvre en déport 5 sont dans ce cas escamotés, de sorte à positionner le châssis 8 de la partie outil 2 dans une position recentrée par rapport au châssis 12 de la partie attelage 3 (figure 5).

Lorsque le tracteur T atteint le site à traiter, les moyens d'asservissement permettent d'assurer, successivement :
- le déplacement en position inactive des moyens de verrouillage 10 par un mouvement vers le haut du crochet 10a, autorisant le pivotement du rotor 6 autour de l'axe horizontal 9' vers une position déployée en appui sur le sol (selon un sens anti-horaire sur la figure 9), puis
- une action en déploiement des moyens de manoeuvre en déport 5, par laquelle la partie outil 2 se déplace parallèlement à elle-même, selon un mouvement correspondant approximativement à un sens s'étendant depuis la première bordure 12c vers la seconde bordure 12d du châssis 12 de la partie attelage 3 (depuis la figure 5 et jusqu'à la figure 4).

Le véhicule T avance alors à une vitesse régulière, ou au moins sensiblement régulière, comprise par exemple entre 2 et 4 km/heure.

Le sens normal d'avancement est représenté schématiquement sur les figures 1 et 7, par la flèche désignée par le repère A. Le sens de recul est quant à lui représenté schématiquement sur les figures 1 et 8, par la flèche désignée par le repère B.

Lors du mouvement vers l'avant A, le rotor 6 est en rotation de sorte à traiter les végétaux au sol.

La partie outil 2 de l'équipement agricole 1 est avantageusement maintenue en position déportée (figures 4 et 6), par le déploiement de l'actionneur linéaire 5 dédié.

Cette partie outil 2 est également maintenue de sorte que l'axe de rotation 6' du rotor 6 et le plan général 8' de son châssis 8 s'étendent parallèlement et à distance du plan général 12' du châssis 12 de la partie attelage 3.
A cet effet, l'organe télescopique de sécurité 15 est maintenu dans sa longueur au repos L, correspondant également à la longueur des bras non-télescopique 16 (figure 6), ou approximativement à cette longueur.

L'approche d'un obstacle C est décrite ci-dessous pour un équipement agricole 1 en montage avant (les mouvements seraient tout simplement inverses pour un montage arrière).

Ainsi, lors de l'approche d'un obstacle C à contourner, le conducteur du véhicule peut actionner le vérin de déport 5 dédié, pour réduire le déport latéral de l'ensemble rotor 6/caisson 7 et décaler ce dernier latéralement par rapport à cet obstacle C à traiter.

Cette action s'accompagne d'une rotation des chainons 15, 16 autour de leurs axes de rotation respectifs 15a', 16c, 16d.

Les plans 8' et 12' des deux châssis 8 et 12 de l'équipement agricole 1 restent ici parallèles, ou au moins approximativement parallèles, l'un par rapport à l'autre.

Si le conducteur n'a pas vu l'obstacle C ou s'il souhaite traiter la végétation au plus près de celui-ci, le véhicule tracteur T continue à avancer jusqu'à ce que l'ensemble rotor 6/caisson 7 vienne prendre appui sur cet obstacle C (figure 7).

Du fait de la poursuite de l'avancement du véhicule tracteur T, le caisson 7 en appui sur l'obstacle fixe C exerce une force sur le châssis 8 associé, qui provoque lui-même une course en allongement de l'organe télescopique de sécurité 15 jusqu'à une longueur L1 supérieure à la longueur au repos L (illustré sur la figure 7 schématique).

La partie outil 2 subit ainsi un mouvement du genre pivotement par rapport à la partie attelage 3 (sens horaire sur la figure 7), avec en particulier un pivotement du plan général 8' de la partie outil 2 par rapport au plan général 12' de la partie attelage 3 autour de l'axe de rotation 16c des bras non-télescopiques 16 sur cette partie outil 2.

L'équipement agricole 1 subit ainsi un phénomène d'effacement vers l'arrière, évitant sa détérioration et celle de l'obstacle Ç.

Pour le retour de la partie outil 2 en position neutre, le conducteur peut manoeuvrer le véhicule tracteur en marche arrière B.
L'organe télescopique de sécurité 15 reprend alors automatiquement sa longueur au repos L, provoquant le retour de l'ensemble rotor 6/caisson 7 au repos (figure 6).

Pour travailler au plus près de l'autre côté de cet obstacle Ç, le véhicule T avance de sorte que l'ensemble rotor 6/caisson 7 escamoté dépasse cet obstacle C avant son redéploiement.

Le véhicule recule alors dans le sens B, de sorte que le caisson 7 vient à nouveau prendre appui sur l'obstacle C (figure 8).

L'organe télescopique de sécurité 15 subit alors un phénomène de rétractation selon une course en raccourcissement jusqu'à une longueur L2 qui est inférieure à la longueur au repos L.

L'ensemble rotor 6/caisson 7 subit ainsi un phénomène d'effacement vers l'avant. La partie outil 2 est soumise à un mouvement du genre pivotement par rapport à la partie attelage 3 dans un sens inverse (selon un sens anti-horaire sur la figure 8), avec là encore un pivotement du plan général 8' de la partie outil 2 par rapport au plan général 12' de la partie attelage 3 autour de l'axe de rotation 16c des bras non-télescopiques 16 sur cette partie outil 2.

Là encore, il suffit à l'opérateur de manoeuvrer son véhicule tracteur vers l'avant pour que l'ensemble rotor 6 / caisson 7 revienne dans une position neutre (figure 6) sous l'action de son organe télescopique de sécurité 15.

Pour revenir en position route, l'équipement 1 est piloté de sorte à assurer :
- le pivotement de l'ensemble rotor 6/caisson 7 autour de l'axe horizontal 9' vers la position verticale (selon un sens horaire sur la figure 9), par l'action du vérin hydraulique 10c dédié, et
- la commande des moyens de manoeuvre en déport 5 pour recentrer le châssis 8 de la partie outil 2 afin que cette dernière se déplace parallèlement à elle-même selon un mouvement correspondant approximativement à un sens s'étendant depuis la seconde bordure 12d vers la première bordure 12c du châssis 12 de la partie attelage 3 (depuis la figure 4 et jusqu'à la figure 5), et le retour du crochet mobile 10a en position active (sous l'effet de son ressort de rappel) pour coopérer avec la tige complémentaire 10b.

L'arbre récepteur traversant 11 b permet de faciliter les raccordements avant et arrière, pour modifier un mode de travail avant vers un mode de travail arrière, ou inversement.

Les éléments de transfert de puissance sont indépendants du mode avant/arrière et ne nécessitent donc aucune intervention.

De plus, les moyens de liaison 4 et la partie attelage 3 sont symétriques, ce qui autorise un montage indifférent à l'avant ou à l'arrière du véhicule tracteur T.

Le procédé de transformation d'un mode avant/arrière vers l'autre consiste tout simplement à :
- démonter le vérin de sécurité 15 et le vérin de déport 5,
- démonter les bras non-télescopiques 16a, 16b par rapport au châssis 8 de la partie outil 2,
- disposer l'ensemble dans l'autre position,
- refixer les bras non-télescopiques 16a, 16b sur le châssis 8 de la partie outil 2, puis
- remonter le vérin de sécurité 15 et le vérin de déport 5 sur l'équipement 1, symétriquement par rapport au plan 8' du châssis 8 de la partie outil 2.

A titre indicatif, en montage arrière (figure 1), l'équipement agricole 1 est également apte à subir des phénomènes d'effacement, de part et d'autre d'une position neutre, à savoir :
- un effacement vers l'arrière, illustré par la flèche M dans le sens horaire sur la figure 1, dans lequel le vérin de sécurité 15 subit le phénomène de rétractation, et
- un effacement vers l'avant, illustré par la flèche N dans le sens anti-horaire sur la figure 1, dans lequel le vérin de sécurité 15 subit le phénomène d'allongement.

## Revendications

1. Equipement agricole pour un véhicule motorisé, comprenant :
- une partie outil (2), par exemple pour le traitement d'un sol ou d'une végétation,
- une partie attelage (3), destinée à être solidarisée avec ledit véhicule motorisé,
- des moyens de liaison (4) formant un parallélogramme déformable, comprenant deux chaînons juxtaposés (15, 16) dont les extrémités (15a, 16a1, 16b1) sont montées pivotantes autour d'axes de rotation verticaux (15a', 16c, 16d) sur ladite partie outil (2) et ladite partie attelage (3), et
- des moyens de manoeuvre en déport (5), pour ajuster le déport latéral de ladite partie outil (2) par rapport à ladite partie attelage (3) par pivotement desdits chaînons (15, 16) autour de leurs axes de rotation respectifs (15a', 16c, 16d),
- l'un au moins desdits chaînons pivotants (15,16) consiste en au moins un organe télescopique (15) qui présente une longueur au repos (L), avec une course disponible en allongement et/ou en raccourcissement par rapport à ladite longueur au repos (L), **caractérisé en ce que** ledit organe télescopique (15) est associé à des moyens (17) de rappel élastique à ladite longueur au repos (L).

2. Equipement agricole selon la revendication 1, **caractérisé en ce que** l'organe télescopique (15) consiste en un vérin à fluide de type hydraulique ou pneumatique.

3. Equipement agricole selon la revendication 2, **caractérisé en ce que** l'organe télescopique (15) consiste en un vérin comprenant un cylindre (15b) présentant deux extrémités opposées qui sont chacune équipées d'une tige mobile (15c), offrant une course en allongement et en raccourcissement dudit organe télescopique (15) par rapport à la longueur au repos (L).

4. Equipement agricole selon l'une quelconque des revendications 2 ou 3, **caractérisé en ce que** le vérin (15) formant l'organe télescopique consiste en un vérin hydraulique, et **en ce que** les moyens de rappel élastique (17) consistent en un accumulateur hydraulique pour assurer un retour dudit vérin (15) dans une position initiale correspondant à ladite longueur au repos (L).

5. Equipement agricole selon l'une quelconque des revendications 1 à 4, **caractérisé en ce que** le second chaînon pivotant (16) comporte au moins un bras non-télescopique (16a, 16b).

6. Equipement agricole selon la revendication 5, **caractérisé en ce que** ledit second chaînon pivotant (16) se compose de deux bras non-télescopiques superposés indépendants, l'un supérieur (16a) et l'autre inférieur (16b), qui s'étendent dans un même plan vertical (16') et dont les extrémités (16a1, 16b1) sont montées pivotantes autour d'axes de rotation verticaux coaxiaux (16c, 16d) sur ladite partie outil (2) et ladite partie attelage (3).

7. Equipement agricole selon la revendication 6, **caractérisé en ce qu'**un châssis (12) de la partie attelage (3) et un châssis (8) de la partie outil (2) sont définis par une bordure supérieure (8a, 12a) et par une bordure inférieure (8b, 12b), et **en ce que** lesdits bras non-télescopiques (16a, 16b) relient, pour l'un (16a), lesdites bordures supérieures (8a, 12a) et, pour l'autre (16b), lesdites bordures inférieures (8b, 12b).

8. Equipement agricole selon l'une quelconque des revendications 5 à 7, **caractérisé en ce qu'**un châssis (12) de la partie attelage (3) et un châssis (8) de la partie outil (2) sont définis par deux bordures latérales (8c, 8d, 12c, 12d), et **en ce que** lesdits chaînons pivotants (15, 16) relient lesdits châssis (8, 12) de telle sorte que :
- ledit organe télescopique (15) relie deux bordures latérales (8c, 12c) en regard desdits châssis (8, 12) associés, et
- ledit ou lesdits bras non-télescopiques (16a, 16b) s'étendent entre lesdites bordures latérales (8c, 8d, 12c, 12d) desdits deux châssis associés (8, 12), de préférence à égale distance desdites bordures latérales (8c, 8d, 12c, 12d).

9. Equipement agricole selon l'une quelconque des revendications 5 à 8, **caractérisé en ce que** les moyens (5) pour ajuster le déport latéral de ladite partie outil (2) par rapport à ladite partie attelage (3) consistent en un actionneur linéaire intercalé entre le ou l'un des bras non-télescopiques (16a) et ladite partie outil (2).

10. Equipement agricole selon l'une quelconque des revendications 1 à 9, **caractérisé en ce que** ladite partie outil (2) comporte - au moins une pièce rotative (6) pour la coupe et le broyage de végétaux, et - un châssis (8) relié à ladite partie attelage (3) par lesdits moyens de liaison (4) et intégrant un arbre traversant de transmission (11c) pour l'entraînement de ladite pièce rotative (6), et **en ce que** ledit arbre traversant (11 c) est cannelé à l'avant et à l'arrière pour autoriser son montage indifférent à l'avant ou à l'arrière dudit véhicule motorisé.

11. Equipement agricole selon l'une quelconque des revendications 1 à 10, **caractérisé en ce que** ladite partie outil (2) comporte - au moins une pièce rotative (6) pour la coupe et le broyage de végétaux, et - un châssis (8) relié à ladite partie attelage (3) par lesdits moyens de liaison (4), laquelle pièce rotative (6) est assemblée avec ledit châssis (8) par le biais d'au moins une articulation horizontale (9) autorisant une rotation de ladite pièce rotative (6) entre - une position relevée au repos et - une position déployée de travail, et **en ce que** ladite partie outil (2) comporte des moyens de verrouillage (10) qui sont mobiles entre une position active, apte à bloquer ladite pièce rotative (6) dans ladite position relevée, et une position inactive, pour libérer ladite pièce rotative (6).

12. Equipement agricole selon la revendication 11, **caractérisé en ce qu'**il comporte des moyens d'asservissement associés auxdits moyens de verrouillage (10) et auxdits moyens de manoeuvre en déport (5), de sorte à assurer le déplacement en position inactive desdits moyens de verrouillage (10) et une action sur lesdits moyens de manoeuvre en déport (5).

13. Equipement agricole selon l'une quelconque des revendications 11 ou 12, en combinaison avec l'une quelconque des revendications 7 à 9, **caractérisé en ce qu'**il comporte deux articulations horizontales (9) ménagées de part et d'autre dudit châssis porteur (8) de ladite partie outil (2), pour définir un triangle (18), équilatéral ou isocèle, avec l'axe de rotation (16c) défini par l'extrémité (16a1, 16b1) du ou des bras non-télescopiques (16a, 16b) associés audit châssis (8) de la partie outil (2).

## Patentansprüche

1. Landwirtschaftliches Gerät für ein Motorfahrzeug mit
- einem Werkzeugteil (2), zum Beispiel für die Bearbeitung eines Bodens oder einer Vegetation,
- einem Ankopplungsteil (3), dazu bestimmt, mit dem Motorfahrzeug fest verbunden zu werden,
- Verbindungsmitteln (4), die ein verformbares Parallelogramm bilden, mit zwei nebeneinander angeordneten Verbindungsgliedern (15, 16), deren Enden (15a, 16a1, 16b1) um senkrechte Drehachsen (15a', 16c, 16d) schwenkbar an dem Werkzeugteil (2) und dem Ankopplungsteil (3) befestigt sind, und
- Mitteln (5) zum versetzenden Betätigen, um den seitlichen Versatz des Werkzeugteils (2) gegenüber dem Ankopplungsteil (3) durch Schwenken der Verbindungsglieder (15, 16) um deren jeweilige Drehachsen (15a', 16c, 16d) einzustellen,
- wobei wenigstens eins der schwenkbare Verbindungsglieder (15, 16) aus einem Teleskoporgan (15) besteht, das im Ruhezustand eine Länge (L) aufweist, mit einem Hub, der für eine Verlängerung und/oder eine Verkürzung des Hubs gegenüber der Länge (L) im Ruhezustand zur Verfügung steht,
**dadurch gekennzeichnet, daß** das Teleskoporgan (15) Mitteln (17) zum elastischen Rückstellen auf die Länge (L) im Ruhezustand zugeordnet ist.

2. Landwirtschaftliches Gerät gemäß Anspruch 1, **dadurch gekennzeichnet, daß** das Teleskoporgan (15) aus einem Arbeitszylinder mit einem Fluid vom hydraulischen oder pneumatischen Typ besteht.

3. Landwirtschaftliches Gerät gemäß Anspruch 2, **dadurch gekennzeichnet, daß** das Teleskoporgan (15) aus einem Arbeitszylinder besteht, der einen Zylinder (15b) mit zwei entgegengesetzten Enden aufweist, die jeweils eine bewegliche, einen Hub für eine Verlängerung und/oder eine Verkürzung des Teleskoporgans (15) gegenüber der Länge (L) im Ruhezustand bietende Stange (15c) aufweisen.

4. Landwirtschaftliches Gerät gemäß einem der Ansprüche 2 oder 3, **dadurch gekennzeichnet, daß** der das Teleskoporgan bildende Arbeitszylinder (15) aus einem hydraulischen Arbeitszylinder besteht und daß die Mittel (17) zum elastischen Rückstellen aus einem hydraulischen Sammler zum Sicherstellen des Rückstellens des Arbeitszylinders (15) in eine der Länge (L) im Ruhezustand entsprechende Ausgangsposition bestehen.

5. Landwirtschaftliches Gerät gemäß einem der Ansprüche 1 bis 4, **dadurch gekennzeichnet, daß** das zweite schwenkende Verbindungsglied (16) wenigstens einen nicht teleskopischen Arm (16a, 16b) aufweist.

6. Landwirtschaftliches Gerät gemäß Anspruch 5, **dadurch gekennzeichnet, daß** sich das zweite schwenkende Verbindungsglied (16) aus zwei unabhängigen, übereinander angeordneten, nicht teleskopischen Armen, einem oberen (16a) und einem unteren (16b), zusammensetzt, sie sich in ein und derselben senkrechten Ebene (16') erstrecken und deren Enden (16a1, 16b1) am Werkzeugteil (2) und am Ankopplungsteil (3) um senkrechte koaxiale Drehachsen (16c, 16d) schwenkbar befestigt sind.

7. Landwirtschaftliches Gerät gemäß Anspruch 6, dadurch geltennzeichnet, daß ein Chassis (12) des Ankopplungsteils (3) und ein Chassis (8) des Werkzeugteils (2) durch einen oberen Rand (8a, 12a) und durch einen unteren Rand (8b, 12b) bestimmt sind und daß von den nicht teleskopischen Armen (16a, 16b) der eine (16a) die oberen Ränder (8a, 12a) und der andere (16b) die unteren Ränder (8b, 12b) miteinander verbindet.

8. Landwirtschaftliches Gerät gemäß einem der Ansprüche 5 bis 7, **dadurch gekennzeichnet, daß** ein Chassis (12) des Ankopplungsteils (3) und ein Chassis (8) des Werkzeugteils (2) durch zwei seitliche Ränder (8c, 8d, 12c, 12d) bestimmt sind und daß die schwenkbaren Verbindungsglieder (15, 16) die Chassis (8, 12) derart verbinden, daß
- das Teleskoporgan (15) zwei seitliche, den zugeordneten Chassis (8, 12) zugewandte Ränder (8c, 12c) verbindet und
- der oder die nicht teleskopischen Arme (16a, 16b) sich zwischen den seitlichen Rändern (8c, 8d, 12c, 12d) der zugeordneten Chassis (8, 12), vorzugsweise im gleichen Abstand von den seitlichen Rändern (8c, 8d, 12c, 12d), erstrecken.

9. Landwirtschaftliches Gerät gemäß einem der Ansprüche 5 bis 8, **dadurch gekennzeichnet, daß** die Mittel (5) zum Einstellen des seitlichen Versatzes des Werkzeugteils (2) gegenüber dem Ankopplungsteil (3) aus einem zwischen den oder einen der nicht teleskopischen Arme (16a) und das Werkzeugteils (2) eingefügten linearen Betätigungselement bestehen.

10. Landwirtschaftliches Gerät gemäß einem der Ansprüche 1 bis 9, dadurch gekennzeichet, daß das Werkzeugteil (2) - wenigstens ein drehendes Teil (6) für das Schneiden und das Zerkleinern von Pflanzen und - ein mit dem Ankopplungsteil (3) durch die Verbindungsmittel (4) verbundenes und eine durchdringende Übertragungsrvelle (11c) für den Antrieb des drehenden Teils (6) beinhaltendes Chassis (8) aufweist und daß die durchdringende Welle (11c) vorne und hinten gerillt ist, um sie am Motorfahrzeug beliebig vorne oder hinten anzubringen.

11. Landwirtschaftliches Gerät gemäß einem der Ansprüche 1 bis 10, dadurch gekenntzeichnet, daß das Werkzeugteil (2) - wenigstens ein drehendes Teil (6) für das Schneiden und das Zerkleinern von Pflanzen und - ein mit dem Ankopplungsteil (3) durch die Verbindungsmittel (4) verbundenes Chassis (8) aufweist, wobei das drehende Teil (6) mit dem Chassis (8) über wenigstens ein horizontales Gelenk (9) verbunden ist, das eine Drehung des drehenden Teils (6) zwischen - einer angehobenen Position im Ruhezustand und - einer ausgefahrenen Arbeitsposition ermöglicht, und daß das Werkzeugteil (2) Verriegelungsmittel (10) aufweist, die zwischen einer aktiven Position, in der das drehende Teil (6) in der angehobenen Position blockiert werden kann, und einer inaktiven Position zum Freigeben des drehenden Teils (6) bewegbar sind.

12. Landwirtschaftliches Gerät gemäß Anspruch 11, **dadurch gekennzeichnet, daß** es den Verriegelungsmitteln (10) und den Mitteln (5) zum versetzenden Betätigen zugeordnete Ansteuermittel aufweist, um ein Versetzen der Verriegelungsmittel (10) in die inaktive Position und ein Betätigen der Mittel (5) zum versetzenden Betätigen sicherzustellen.

13. Landwirtschaftliches Gerät gemäß einem der Ansprüche 11 oder 12 in Verbindung mit einem der Ansprüche 7 bis 9, **dadurch gekennzeichnet, daß** es zwei horizontale, beiderseits des das Werkzeugteil (2) tragenden Chassis (8) angeordnete Gelenke (9) zum Definieren eines gleichseitigen oder gleichschenkligen Dreiecks mit der durch das Ende (16a1, 16b1) des oder der dem Chassis (8) des Werkzeugteils (2) zugeordneten nicht teleskopischen Arme definierten Drehachse (16c) aufweist.

## Claims

1. An agricultural equipment for a motor vehicle, comprising:
- a tool part (2), for example for the processing of a ground or vegetation,
- a hitch part (3), intended to be fastened to said motor vehicle,
- connection means (4) forming a deformable parallelogram, comprising two juxtaposed links (15, 16) whose ends (15a, 16a1, 16b1) are pivotally mounted about vertical axes of rotation (15a', 16c, 16d) to said tool part (2) and said hitch part (3), and
- offset operation means (5), to adjust the lateral offset of said tool part (2) with respect to said hitch part (3) by pivoting of said links (15, 16) about their respective axes of rotation (15a', 16c, 16d),
- one at least of said pivoting links (15, 16) consisting in at least one telescopic member (15) that has a length at rest (L), with an available stroke in lengthening and/or shortening with respect to said length at rest (L),
**characterized in that** said telescopic member (15) is associated with means (17) for elastic return to said length at rest (L).

2. The agricultural equipment according to claim 1, **characterized in that** the telescopic member (15) consists in a fluid jack of the hydraulic or pneumatic type.

3. The agricultural equipment according to claim 2, **characterized in that** the telescopic member (15) consists in a jack comprising a cylinder (15b) having two opposite ends that are each equipped with a mobile rod (15c), offering a stroke in lengthening and shortening of said telescopic member (15) with respect to the length at rest (L).

4. The agricultural equipment according to any one of claims 2 or 3, **characterized in that** the jack (15) forming the telescopic member consists in a hydraulic jack, and **in that** the elastic return means (17) consist in a hydraulic accumulator for ensuring a return of said jack (15) to an initial position corresponding to said length at rest (L).

5. The agricultural equipment according to any one of claims 1 to 4, **characterized in that** the second pivoting link (16) includes at least one non-telescopic arm (16a, 16b).

6. The agricultural equipment according to claim 5, **characterized in that** said second pivoting link (16) is consisted of two mutually independent, superimposed, non-telescopic arms, an upper one (16a) and a lower one (16b), which extend in a same vertical plane (16') and whose ends (16a1, 16b1) are pivotally mounted about coaxial vertical axes of rotation (16c, 16d) to said tool part (2) and said hitch part (3).

7. The agricultural equipment according to claim 6, **characterized in that** a frame (12) of the hitch part (3) and a frame (8) of the tool part (2) are defined by an upper edge (8a, 12a) and a lower edge (8b, 12b), and **in that** said non-telescopic arms (15a, 16b) connect, for one of them (16a), said upper edges (8a, 12a) together and, for the other one (16b), said lower edges (8b, 12b) together.

8. The agricultural equipment according to any one of claims 5 to 7, **characterized in that** a frame (12) of the hitch part (3) and a frame (8) of the tool part (2) are defined by two lateral edges (8c, 8d, 12c, 12d), and **in that** said pivoting links (15, 16) connect said frames (8, 12) together so that:
- said telescopic member (15) connects together two opposite lateral edges (8c, 12c) of said associated frames (8, 12), and
- said non-telescopic arm(s) (16a, 16b) extend between said lateral edges (8c, 8d, 12c, 12d) of said two associated frames (8, 12), preferably at equal distance from said lateral edges (8c, 8d, 12c, 12d).

9. The agricultural equipment according to any one of claims 5 to 8, **characterized in that** the means (5) for adjusting the lateral offset of said tool part (2) with respect to said hitch part (3) consist in a linear actuator interposed between the or one of the non-telescopic arms (16a) and said tool part (2).

10. The agricultural equipment according to any one of claims 1 to 9, **characterized in that** said tool part (2) includes - at least one rotary element (6) for cutting and crushing plants, and - a frame (8) connected to said hitch part (3) by said connection means (4) and integrating a transmission through-shaft (11c) for driving said rotary element (6), and **in that** said through-shaft (11 c) is corrugated on the front and on the rear to allow the mounting thereof indifferently to the front or to the rear of said motor vehicle.

11. The agricultural equipment according to any one of claims 1 to 10, **characterized in that** said tool part (2) includes - at least one rotary element (6) for cutting and crushing plants, and - a frame (8) connected to said hitch part (3) by said connection means (4), wherein the rotary element (6) is assembled to said frame (8) through at least one horizontal articulation (9) allowing a rotation of said rotary element (6) between - a raised, rest position and - an extended, working position, and **in that** said tool part (2) includes locking means (10) that are mobile between an active position, adapted to lock said rotary element (6) in said raised position, and an inactive position, for releasing said rotary element (6).

12. The agricultural equipment according to claim 11, **characterized in that** it includes control means associated with said locking means (10) and said offset operation means (5), so as to ensure the displacement to the inactive position of said locking means (10) and an action to said offset operation means (5).

13. The agricultural equipment according to any one of claims 11 or 12, in combination with any one of claims 7 to 9, **characterized in that** it includes two horizontal articulations (9) provided on either side of said carrier frame (8) of said tool part (2), to define an equilateral or isosceles triangle (18) with the axis of rotation (16c) defined by the end (16a1, 16b1) of the non-telescopic arm(s) (16a, 16b) associated with said frame (8) of the tool part (2).
